# FASCICULE DE BREVET EUROPEEN

(11) **EP 2 727 766 B1**
(45) Date de publication et mention de la délivrance du brevet: **11.01.2017**
(21) Numéro de dépôt: 12007434.9
(22) Date de dépôt: 30.10.2012
(51) Int. Cl.: B60P 7/08, F16G 11/12

(54) **Ensemble d'arrimage d'une charge**
Verstauungseinheit einer Ladung
Assembly for securing a load

(43) Date de publication de la demande: 07.05.2014
(73) Titulaire: Talbot Lifting & Security Europe Limited, Clonskeagh Dublin 4 (IE)
(72) Inventeur: Guyard, François Xavier, F 41190 Chambon Sur Cisse (FR)
(74) Mandataire: Thibon, Norbert

(56) Documents cités:
- BE-A2- 891 718
- GB-A- 2 106 607
- US-A- 6 048 146

## Description

L'invention concerne un ensemble d'arrimage d'une charge sur un bâti, qui peut servir en particulier à la fixation d'un bateau sur une remorque de transport.

Dans ce contexte, on connaît des dispositifs d'arrimage par sangle. Une extrémité de la sangle est fixée sur un côté de la remorque et la sangle est tendue pour faire le tour du bateau et accrocher l'autre extrémité au côté opposé de la remorque. Dans de tels ensembles d'arrimage, où plusieurs sangles sont tendues autour du bateau pour sécuriser celui-ci sur la remorque, il est particulièrement difficile de s'assurer de la tension optimale des sangles du fait de la nature du textile formant la sangle et de son allongement naturel. L'utilisation de ces sangles avec des cliquets, ou avec des ensembles de serrage à pignon et crémaillère tel que divulgué dans le document GB 2 106 607, pour réaliser la tension requiert un savoir-faire pour être sûr que la tension soit optimale. Or, ceci est particulièrement important pour la tenue du bateau sur la remorque, surtout lorsque celui-ci est transporté sur route par la suite, et pour la durée de vie des sangles qui, si le bateau n'est pas complètement immobilisé, peuvent subir de fortes contraintes et risquer de s'endommager. Par ailleurs, l'utilisation de tels ensembles d'arrimage à sangles nécessite un soin important à apporter au rangement des sangles après chaque utilisation pour ne pas fragiliser l'ensemble avant l'utilisation suivante.

L'invention vise à proposer une alternative aux systèmes d'arrimage à sangle connus par le passé. Elle consiste en un ensemble d'arrimage d'un bateau sur un bâti dans lequel on utilise un câble que l'on tend entre un organe de fixation solidaire du bateau et la remorque. L'extrémité du câble opposée au bateau est rapportée sur un boîtier à pignon et manivelle d'un dispositif tenseur comportant en outre une barre formant crémaillère qui peut être rendue solidaire de la remorque. Le boîtier à pignon est adapté à se déplacer le long de la barre pour régler la tension du câble sous l'action de la manivelle. Ainsi, on s'assure que la tension du câble soit bonne. Par cette conception, on peut aussi s'assurer d'une position de pré tension dans laquelle le boîtier est engagé sur les premières dents de la crémaillère et prend une position sécurisée en attente de l'action de la manivelle. Ce double niveau de sécurité, avec un premier niveau de pré tension dans lequel le bateau est retenu et un deuxième niveau ultérieur de tension optimale, est simple et rapide à mettre en oeuvre, et particulièrement intuitif pour un utilisateur qui peut dès lors arrimer correctement le bateau sans formation préalable.

Suivant l'invention, la barre est réglable en inclinaison autour de deux axes d'articulation portés par le bâti, de sorte que l'on optimise également la tension du câble par son alignement correct entre le point d'attache sur la remorque et le point d'attache sur le bateau. Il est ainsi possible de réaliser un arrimage correct, répondant aux normes de sécurité, de bateaux de différentes tailles avec le même ensemble d'arrimage.

Par ailleurs, on associe aux moyens de mise sous tension du câble des moyens de freinage adaptés à empêcher le déplacement du boîtier le long de la crémaillère par le blocage en rotation du pignon. Selon l'invention, ces moyens de freinage comportent un frein qui agit directement sur le pignon et un verrou qui agit directement sur le frein. Dès lors, le frein peut prendre une position de dégagement du pignon uniquement lorsque le verrou est dans une position de déblocage du frein. Les positions passives de ces moyens de freinage, c'est-à-dire la position de blocage prise par le verrou et la position de dégagement prise par le frein, sont obtenues par rappel élastique.

On s'assure ainsi de façon automatique du blocage en rotation du pignon, et donc du blocage du déplacement du boîtier le long de la crémaillère, dès lors que le verrou n'est pas actionné. Le fonctionnement est particulièrement sur pour l'utilisateur.

Selon différentes caractéristiques de l'invention :
- le frein est monté en rotation autour d'un deuxième axe de rotation tandis que le verrou est monté en rotation autour d'un troisième axe de rotation, lesdits deux axes de rotation étant perpendiculaires entre eux, et caractérisé en ce que le verrou porte un moyen de blocage adapté à être au contact du frein dans la position passive et qui se dégage du frein par rotation du verrou ;
- le moyen de blocage peut être un doigt disposé en saillie d'une face du verrou qui forme une surface de butée du frein libre en rotation lorsque le verrou a pivoté par rapport à son axe d'articulation ;
- les moyens de freinage sont adaptés à être actionnés par des moyens de préhension solidaires respectivement de l'un des moyens de freinage et qui s'étendent en saillie d'une première paroi du boîtier, vers l'extérieur dudit boîtier. Ainsi, une action simultanée sur les deux moyens de préhension est nécessaire pour pouvoir désolidariser la crémaillère et le boîtier ;
- le verrou est adapté à être actionné par un moyen de commande complémentaire, qui s'étend en saillie d'une deuxième paroi du boîtier, depuis l'extérieur dudit boîtier et qui est actionné automatiquement lorsque ladite manivelle est rapportée contre ladite deuxième paroi du boîtier.
- les axes d'articulation de la barre formant crémaillère sont montés coulissants sur un longeron du bâti. Ainsi, au même titre que la longueur de la crémaillère le long de laquelle peut se placer le boîtier, le coulissement possible de celle-ci sur le bâti permet de s'adapter à de multiples configurations dimensionnelles de bateaux et de remorques ;
- le câble est plié sur lui-même de manière à former, à l'extrémité adaptée à coopérer avec un organe de fixation solidaire de la charge, une boucle et à présenter à l'autre extrémité deux brins parallèles noyés dans un habillage en élastomère, les deux brins étant adaptés à coopérer avec le dispositif tenseur. L'extrémité du câble formée par les deux brins est rendue solidaire d'un élément d'attache femelle adaptée à coopérer avec un élément d'attache mâle fixée au boîtier à pignon du dispositif tenseur. On peut noter que la conception de l'ensemble d'arrimage permet des opérations de service après-vente spécifiques sur certaines des pièces, et notamment sur le câble, et ce même si la conception du câble et des moyens pour le mettre en tension lui confère une grande longévité.

L'invention sera maintenant plus complètement décrite dans le cadre de caractéristiques préférées et de leurs avantages, en faisant référence aux figures 1 à 8.
- la figure 1 est une représentation schématique d'un bateau arrimé sur une remorque au moyen de quatre ensembles d'arrimage (dont deux visibles) selon le principe de l'invention, et sur laquelle on distingue particulièrement un câble et un dispositif tenseur de ce câble formé par un boîtier et une crémaillère,
- les figures 2 et 3 sont des vues de dessus du boîtier, sans bouchon supérieur pour la bonne visibilité des éléments internes au boîtier, respectivement avec et sans manivelle,
- les figures 4 et 5 sont des vues de côté du boîtier illustré sur les figures 2 et 3, respectivement avec et sans manivelle,
- la figure 6 est une vue éclatée des éléments du boîtier illustré sur les figures 2 à 5,
- la figure 7 est une vue en perspective des éléments représentés schématiquement sur la figure 1,
- et la figure 8 est une vue illustrant le câble.

L'ensemble d'arrimage va être décrit dans le cas de son application à l'arrimage d'un bateau sur une remorque, mais il sera compris que d'autres charges peuvent être fixées sur une remorque ou tout autre bâti grâce à l'ensemble d'arrimage de l'invention.

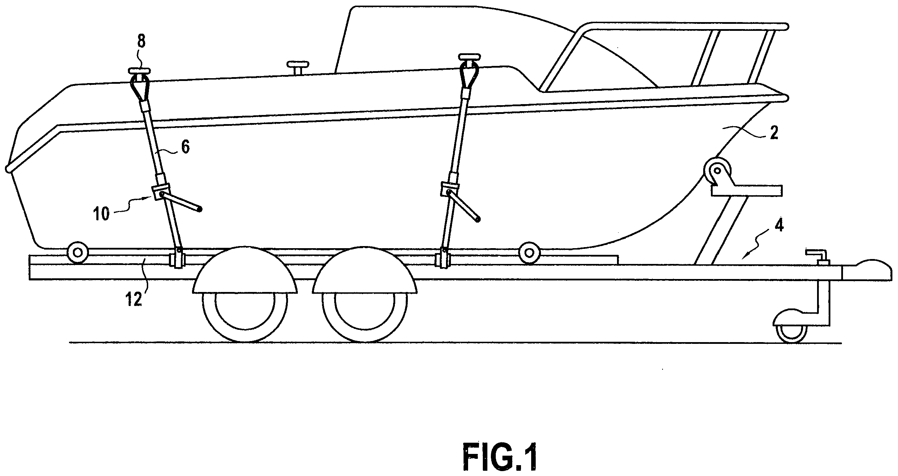

Tel qu'illustré à la figure 1, le bateau 2 est rapporté sur la remorque 4 et y est maintenu en position par un ensemble d'arrimage.

Un ensemble d'arrimage comporte un câble 6 adapté à être relié à une extrémité à un organe de fixation 8 et à être tendu par le déplacement d'un dispositif tenseur 10 sur lequel il est fixé par son autre extrémité, le dispositif tenseur 10 étant monté sur un longeron 12 disposé latéralement sur la remorque. On comprendra que selon l'invention, l'organe de fixation 8 peut être solidaire de la remorque de sorte que le bateau est maintenu en position par ceinturage, ou qu'il peut être solidaire du bateau et prendre la forme d'un taquet comme illustré sur la figure 1.

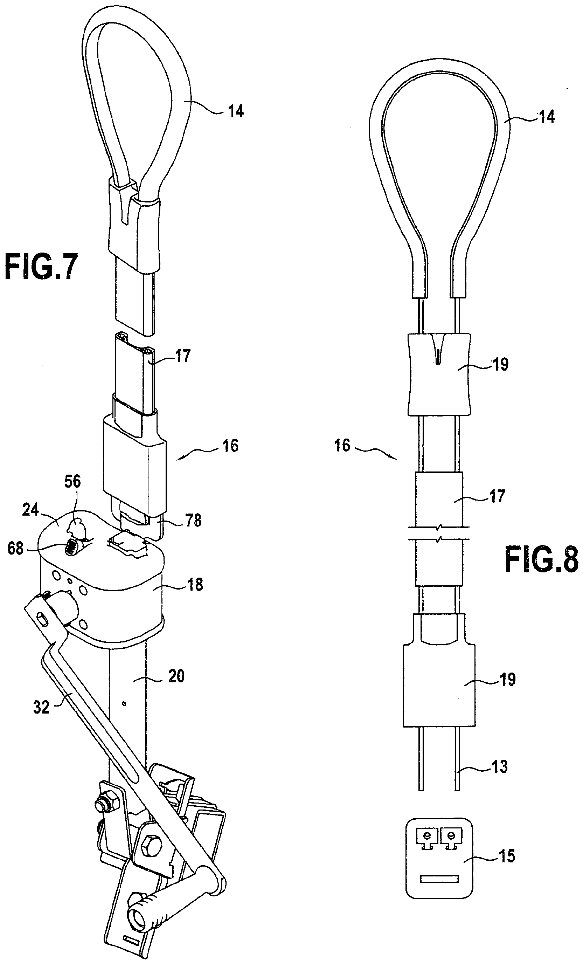

Tel que cela est visible sur la figure 8, le câble présente une première extrémité, dite extrémité distale 14, qui présente une forme de boucle adaptée à être enfilée autour du taquet solidaire du bateau, ainsi qu'une deuxième extrémité opposée dite extrémité proximale 16, qui coopère avec le dispositif tenseur. Le câble est avantageusement plié sur lui-même de manière à former la boucle de la première extrémité distale, de sorte que l'extrémité proximale du câble prend la forme de deux brins 13 rapportés sur une plaque formant un moyen femelle d'attache 15 adapté à coopérer avec un moyen mâle d'attache complémentaire porté par le dispositif tenseur. Les brins du câble sont noyés dans un habillage 17, à titre d'exemple réalisé en élastomère, pour des raisons à la fois esthétiques pour cacher le câble, mécaniques pour s'assurer du parallélisme entre eux des deux câbles, ainsi que pour des raisons de protection du bateau. Des caches 19 montés libres le long des brins pourront remplir les mêmes fonctions de part et d'autre de l'habillage lorsque le câble est plus ou moins tendu.

Le dispositif tenseur 10 est formé d'un boîtier 18 et d'une barre formant crémaillère 20 autour de laquelle le boîtier est enfilé.

La barre formant crémaillère est réglable en position et en orientation. Avantageusement, la barre est montée sur le longeron 12 de manière à avoir un degré de liberté en translation le long du longeron et deux degrés de liberté en rotation. Tel qu'illustré à titre d'exemple sur la figure 7, la barre est réglable en translation par un montage sur glissière d'une base sur le longeron de la remorque. Des moyens de blocage associés permettent de figer la position de la crémaillère le long du longeron telle que souhaitée par l'utilisateur. La barre peut en outre tourner autour d'un premier axe porté par la base et qui s'étend longitudinalement, parallèlement au longeron du bâti, et autour d'un deuxième axe qui s'étend transversalement au premier axe, et horizontalement.

Le boîtier 18, sur lequel le câble est accroché, est adapté à se déplacer le long de la crémaillère. On comprend que selon le sens de déplacement du boîtier, l'extrémité du câble accrochée au boîtier est entraînée en rapprochement ou en éloignement de l'extrémité du câble accrochée au bateau de sorte que l'on peut régler la tension du câble par le déplacement du boîtier.

Le boîtier comporte d'une part des moyens de fixation de l'extrémité proximale du câble pour pouvoir entraîner le câble lors du déplacement du boîtier le long de la crémaillère, d'autre part un système pignon et manivelle dans lequel le pignon est adapté à venir en prise avec les dents de la crémaillère pour transformer le mouvement de rotation de la manivelle en un mouvement de translation du boîtier le long de la crémaillère pour le réglage de la tension du câble, ainsi que des moyens de freinage adaptés à bloquer la rotation du pignon et empêcher le déplacement du boîtier le long de la barre formant crémaillère.

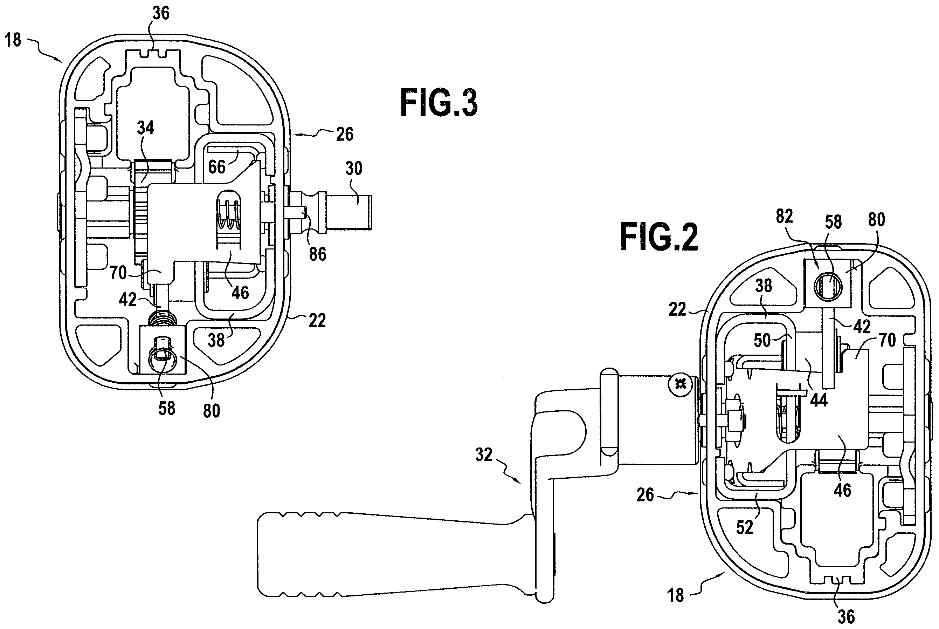

On va maintenant décrire plus en détail le dispositif tenseur en se référant aux figures 2 à 8, notamment pour décrire le rôle du système pignon et manivelle et de la crémaillère pour régler la tension du câble, ainsi que le rôle des moyens de freinage pour sécuriser l'utilisation du dispositif en s'assurant que cette utilisation ne soit pas trop complexe et qu'il soit notamment aisé de désengager les moyens de freinage lorsque cela est nécessaire.

Le boîtier comporte un bâti 22 fermé à ses deux extrémités inférieure et supérieure respectivement par un bouchon 24 inférieur et supérieur. Le bâti comporte un alésage 25 sur sa paroi avant 26 et un alésage sur sa paroi arrière qui sont adaptés à recevoir un premier axe qui traverse le bâti et qui fait partie du système pignon et manivelle. Une première extrémité de ce premier axe vient loger dans l'alésage de la paroi arrière et elle présente un épaulement adapté à former butée contre la face interne de la paroi arrière, tandis que l'extrémité opposée de ce premier axe traverse l'alésage de la paroi avant de manière à dépasser en saillie de la paroi avant pour porter la manivelle 32. On prévoit des paliers pour faciliter la rotation du premier axe au niveau des alésages sur le bâti. Le premier axe porte sensiblement en son centre un pignon 34, adapté à s'engrainer sur les dents de la crémaillère qui traverse verticalement le bâti.

Ce bâti comporte des nervures internes verticales de renforcement qui servent par ailleurs à recevoir un fourreau de guidage 36 de la barre formant crémaillère et une tôle de support 38 des moyens de freinage tels qu'ils seront décrits ci-après.

Le fourreau de guidage présente une section de forme complémentaire à la section de la barre formant crémaillère pour permettre le coulissement du bâti le long de la barre en bloquant les degrés de liberté en rotation. Le fourreau comporte une ouverture 40 dans la paroi qui est orientée vers l'intérieur du bâti pour laisser dépasser en saillie les dents de la crémaillère de manière à ce que le pignon puisse coopérer avec la crémaillère.

Les moyens de freinage comportent un frein formé par un cliquet 42 qui tourne autour d'un deuxième axe de rotation 44 et un verrou formé par un basculeur 46 qui tourne autour d'un troisième axe de rotation 48, les deuxième et troisième axes de rotation étant perpendiculaires entre eux et respectivement portés par la tôle de support.

La tôle de support présente sensiblement une forme de U, avec une base centrale 50 et deux ailes 52 qui prolongent perpendiculairement la base centrale. La tôle de support est disposée de sorte que les ailes sont fixées sur des nervures internes du bâti et que la base centrale s'étend perpendiculairement au premier axe de rotation associé à la manivelle. Elle comporte d'une part, sur chacune des ailes, un alésage de réception 54 du troisième axe de rotation associé au basculeur, et d'autre part, sur la base centrale, un alésage de réception du deuxième axe associé au cliquet ainsi qu'un alésage adapté à laisser passage à une extrémité en saillie du basculeur lorsque celui-ci est mis en rotation.

Le cliquet est muni à une extrémité supérieure d'un moyen de préhension 56 adapté à dépasser en saillie du boîtier en passant par un alésage réalisé dans le bouchon supérieur (tel que cela est visible sur la figure 7), et à l'extrémité inférieure d'un crochet 58 qui remonte le long de la face arrière du cliquet. Le cliquet comporte en outre un ergot 60 qui s'étend en saillie de sa face avant, pour coopérer avec les dents du pignon.

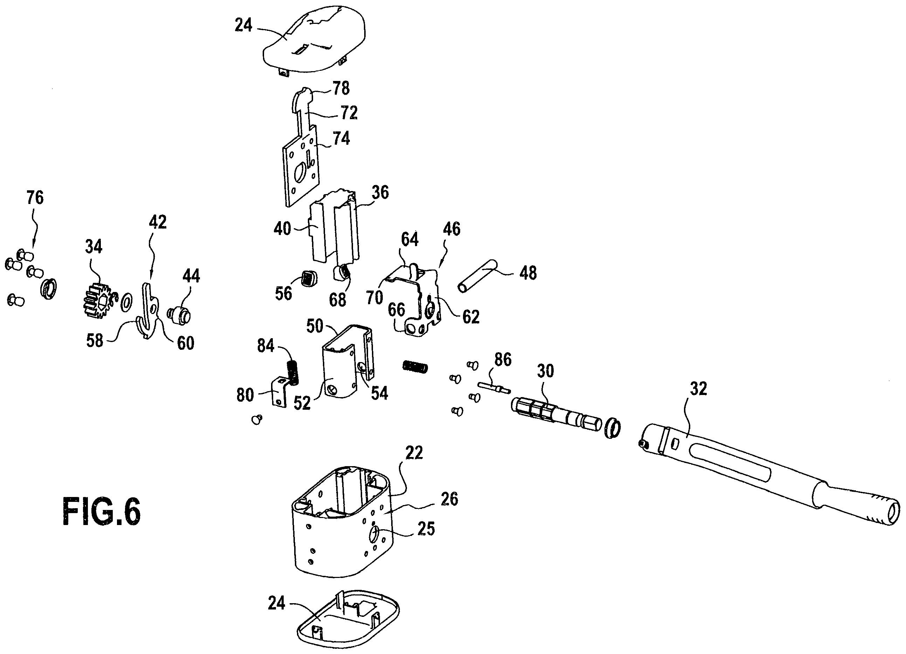

Le basculeur 46 (tel que visible sur la figure 6) présente la forme d'une équerre avec une paroi centrale 62 prolongée perpendiculairement par une paroi supérieure 64 et prolongée à son extrémité inférieure par deux pattes de guidage 66 du troisième axe de rotation 48. Le basculeur comporte un moyen de préhension 68 qui s'étend en saillie de la paroi supérieure. Lorsque le bouchon supérieur couvre le boîtier, le moyen de préhension traverse un alésage du bouchon pour être disposé en saillie du boîtier. La paroi supérieure est prolongée dans son plan, et parallèlement à la direction du troisième axe de rotation autour duquel pivote le basculeur, par un doigt 70 formant moyen de blocage du frein en ce qu'il est adapté à venir contre le cliquet lorsque le basculeur est en position de blocage telle qu'elle va être décrite ci-après. On comprend que le doigt 70 forme le moyen de blocage du cliquet lorsqu'il est en en contact avec ce cliquet et que la paroi supérieure qui s'étend en retrait du doigt forme butée au basculement du cliquet lorsque celui-ci n'est plus bloqué en rotation par le doigt 70.

Afin de ramener le basculeur dans sa position passive, dans laquelle il bloque en position le cliquet, on prévoit un ressort que l'on dispose à titre d'exemple entre la tôle support et la paroi centrale du basculeur, ou encore que l'on entoure autour du troisième axe d'articulation.

Les moyens de freinage sont mobiles en rotation autour de leur axe respectif pour passer d'une position à une autre.

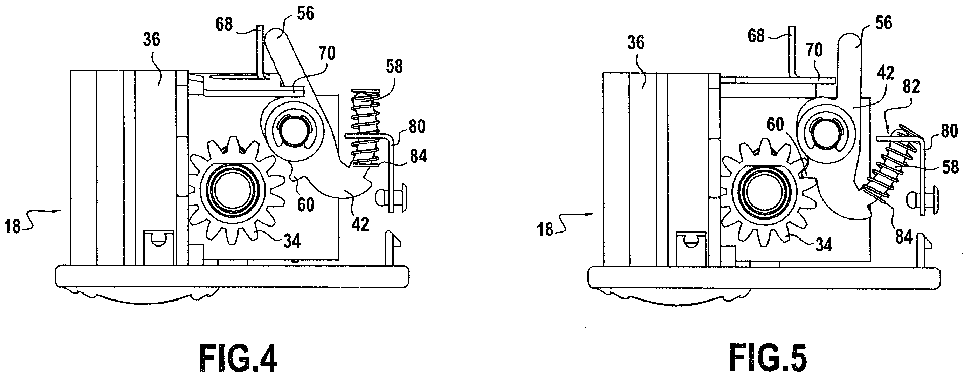

Le cliquet formant le frein est adapté à être mis en rotation manuellement pour passer d'une position passive d'engagement (visible en figures 3 et 5) dans laquelle l'ergot du cliquet est logé entre les dents du pignon, à une position de dégagement (visible en figures 2 et 4) dans laquelle l'ergot est dégagé du pignon de sorte que la crémaillère et le boîtier peuvent coulisser librement l'un par rapport à l'autre. Le basculeur formant le verrou est adapté à être mis en rotation pour passer d'une position passive de blocage du frein, dans laquelle l'ergot du basculeur est au contact du cliquet et empêche celui-ci de bouger, à une position de déblocage dans laquelle l'ergot est décalé et n'est plus au contact cliquet, de sorte que celui-ci peut prendre sa position de dégagement.

Ainsi, on comprend que les moyens de freinage comportent un frein qui agit directement sur le pignon et un verrou qui agit directement sur le frein de telle sorte que ledit frein peut être actionné pour dégager le pignon uniquement lorsque ledit verrou est dans une position de déblocage dans laquelle il ne bloque pas le frein.

Le boîtier comporte en outre un élément mâle d'attache 72 fixé sur la paroi arrière du boîtier. Cet élément mâle d'attache présente une base plane 74 adaptée à être plaquée sur la paroi arrière du boîtier, et maintenue contre le boîtier par quatre rivets 76, ainsi qu'une patte supérieure 78 adaptée à traverser le bouchon supérieur pour s'étendre en saillie du boîtier et former un moyen complémentaire d'accrochage pour l'élément femelle d'attache 15 solidaire de l'extrémité du câble. On permet ainsi l'accrochage du câble avec le dispositif tenseur et l'on s'assure que le déplacement du boîtier le long de la crémaillère règle la tension du câble tendu entre le boîtier et le taquet du bateau. Pour que l'accrochage soit plus sûr et qu'il résiste aux efforts à l'arrachement du câble, la base de l'élément d'attache s'étend sur toute la paroi arrière et elle présente de fait un trou de manière à ne pas cacher l'alésage de la paroi arrière pour permettre la fixation du premier axe. Les éléments mâle et femelle d'attache forment dans cet exemple de réalisation les moyens de fixation, qui pourront dans des variantes prendre d'autres formes, fixes ou amovibles.

On distingue également sur une des parois latérales du boîtier, une équerre 80 associée au cliquet. Cette équerre présente une partie de fixation adaptée à être plaquée contre une paroi latérale du boîtier et une partie de guidage 82 qui s'étend en saillie de la paroi latérale du boîtier, perpendiculairement à la partie de fixation. Un alésage est formé dans la partie de guidage pour permettre le passage de l'extrémité du cliquet formant crochet 58, et la partie de guidage sert de moyen de support à un ressort à spires 84 qui est enroulé autour de ce crochet, le ressort ainsi emprisonné entre l'équerre et le cliquet visant à ramener en position le cliquet dans sa position passive de blocage de la barre formant crémaillère.

Un tel agencement interne du boîtier permet d'obtenir un système de freinage double particulièrement efficace pour l'arrêt en position du dispositif tenseur par rapport à la barre formant crémaillère et au câble d'arrimage. Il n'est possible de faire remonter le boîtier le long de la crémaillère, et donc de détendre le câble et l'arrimage du bateau, que si l'on agit simultanément sur le frein et le verrou.

Avantageusement, le dispositif selon l'invention comporte un autre moyen de commande du basculeur formant le verrou. En complément du moyen de préhension manuel disposé en saillie du boîtier à travers le bouchon supérieur, un pion 86 est prévu pour générer le déplacement en rotation du basculeur autour de son axe, pour passer de la position de blocage à la position de déblocage. Ce pion traverse la paroi avant du boîtier 26, à proximité de l'alésage permettant le passage du premier axe 30 associé à la manivelle, et il repose contre la paroi centrale 62 du basculeur, au-dessus de l'axe de rotation du basculeur. Lorsque l'on appuie sur le pion depuis l'extérieur du boîtier, et donc lorsque l'on pousse ce pion contre le basculeur, on force le basculeur à rotation autour du troisième axe, de la même manière que lorsqu'on actionne le moyen de préhension 68. La position du pion à proximité du premier axe associé à la manivelle permet, lorsque l'on rapporte la manivelle sur cet axe, d'enfoncer le pion automatiquement et donc de forcer systématiquement le basculeur dans sa position de dégagement du cliquet. On comprendra que si l'utilisateur met en place la manivelle, c'est qu'il a l'intention d'actionner cette manivelle pour régler la tension du système d'arrimage en déplaçant le boîtier le long de la barre formant crémaillère et qu'il convient dès lors que le cliquet puisse être mis en position de dégagement. Il est donc particulièrement intéressant que le basculeur soit automatiquement placé dans sa position de déblocage.

Avantageusement, le pion comporte un collet en appui contre la face du basculeur et le pion est prolongé au-delà du basculeur en passant à travers un orifice de taille déterminée pour que le pivotement du basculeur ne soit pas gêné par ce prolongement du pion et pour que le collet soit en appui contre la paroi autour de cet orifice. Le ressort qui permet le retour en position du basculeur est alors guidé axialement par ce prolongement du pion.

On va maintenant décrire le fonctionnement du dispositif dans le cas d'un arrimage de bateau sur une remorque.

Lorsque le bateau est positionné correctement sur la remorque, on fixe l'extrémité du câble en forme de lasso sur un taquet du bateau, dans le cas de l'arrimage illustré sur la figure 1. L'élément femelle d'attache disposée à l'extrémité opposée du câble est engagé avec l'élément mâle d'attache fixé au boîtier. Ce boîtier est ensuite engagé autour de la barre formant crémaillère rapportée sur un des longerons de la remorque. On comprendra qu'il est préférable que la barre formant crémaillère, qui doit être montée articulée sur les longerons, reste à demeure sur la remorque. Selon la longueur du câble et les dimensions du bateau à arrimer, on engage le boîtier plus ou moins profondément autour de la crémaillère, en agissant sur le verrou pour que le frein soit libre en rotation et n'empêche pas le déplacement du boîtier, et ce jusqu'à ce que le câble soit en pré tension. Ainsi, dans cette première position, le bateau est maintenu par le câble pré tendu et le boîtier ne peut remonter le long de la crémaillère car il est bloqué par l'action des moyens de freinage.

L'ensemble d'arrimage selon l'invention permet ainsi une position intermédiaire avant que l'utilisateur utilise la manivelle pour réaliser la tension optimale, ce qui permet par exemple de placer chacun des ensembles d'arrimage utilisés pour un bateau dans cette position intermédiaire de pré tension du câble en étant sûr que la position des boîtiers soit sécurisée.

Lorsque l'utilisateur a placé chacun des boîtiers dans la position intermédiaire de pré tension du câble, il met successivement chacun des câbles en tension optimale en prenant la manivelle et en fixant pour chaque boîtier cette manivelle sur le premier axe de rotation qui dépasse en saillie de la paroi avant du boîtier. Comme cela a été décrit précédemment, le fait de positionner la manivelle en direction de la paroi enfonce le pion dans le boîtier et le pousse contre le basculeur. Le basculeur pivote autour du troisième axe de rotation de sorte qu'il quitte sa position passive de blocage du frein dans laquelle un moyen de blocage était au contact du frein.

Le pivotement du basculeur formant le verrou décale le moyen de blocage par rapport au plan de rotation du frein et la manivelle maintient le basculeur dans cette position de déblocage. L'utilisateur peut tourner la manivelle pour tendre le câble par engrenage du pignon monté sur la manivelle avec la crémaillère.

Si l'utilisateur actionne le cliquet pour le forcer en position de dégagement, à l'encontre de l'effort élastique de rappel généré par le ressort, ce qui est ici possible puisque le verrou a été actionné par la mise en place de la manivelle, il peut indifféremment tourner la manivelle dans un sens ou dans l'autre tant que le câble le permet. Dans ce cas, selon le sens de rotation de la manivelle, l'utilisateur agit en rapprochement ou en éloignement des extrémités du câble l'une de l'autre, ce qui diminue ou augmente la tension du câble.

Si l'utilisateur n'actionne pas le cliquet et que celui-ci reste en position passive, la rotation de la manivelle ne peut se faire que dans le sens de l'éloignement du boîtier par rapport à l'organe de fixation 8 pour tendre le câble, l'ergot présentant une face avant plus pentue qui permet son dégagement des dents du pignon et le ressort ramenant l'ergot en prise dans les dents du pignon dès que la dent est passée. La face arrière plus droite de l'ergot et le choix des positions respectivement des premiers et deuxièmes axes de rotation assurent un blocage de l'ergot dans les dents dans le sens du rapprochement du boîtier et donc de la baisse de la tension du câble.

On observe que dès les premiers tours de manivelle, le câble en train de se tendre se dispose de manière à être aligné entre le taquet et le boîtier. En cela, les axes de rotation sur lesquels est montée la crémaillère permettent l'orientation de la crémaillère pour que le boîtier soit correctement aligné.

Par ailleurs, tel que cela a été précisé précédemment, la crémaillère peut coulisser le long du longeron et elle peut être bloquée en position par des moyens de blocage associés. Ceci permet une adaptabilité du système à un usage professionnel, dans lequel la position axiale de la crémaillère peut varier à chaque usage, selon la taille du bateau à arrimer, ou à un usage privé dans lequel l'utilisateur peut régler la position de la crémaillère sur le longeron du bâti lors de la première mise en oeuvre puis figer cette position de sorte que lors des opérations d'arrimage suivantes, cet ajustement longitudinal ne soit plus à faire.

Lorsque le bateau doit être retiré de la remorque, on doit au préalable diminuer la tension du câble avant de décrocher les moyens d'attache du câble et du boîtier. Pour cela, il suffit d'actionner manuellement les deux moyens de préhension (d'abord celui du basculeur puis celui du cliquet) en libérant au préalable la tension sur le cliquet à l'aide de la manivelle, puis de faire coulisser le boîtier le long de la crémaillère jusqu'à une hauteur suffisante pour que la faible tension du câble permette ce décrochement.

La description qui précède explique clairement comment l'invention permet d'atteindre les objectifs qu'elle s'est fixés. En particulier elle.permet l'obtention d'une fixation sûre du bateau, par une tension du câble rendu optimale par la combinaison du serrage par manivelle qui règle la tension par déplacement d'un boîtier à pignon le long d'une crémaillère et par le réglage en inclinaison et en coulissement de cette crémaillère.

Il ressort néanmoins de ce qui précède que l'invention n'est pas limitée aux modes de mise en oeuvre qui ont été spécifiquement décrits et représentés sur les figures et qu'elle s'étend au contraire à toute variante passant par le biais de moyens équivalents, ainsi que d'applications équivalentes.

Elle permet en outre une utilisation particulièrement sûre par la mise en place d'un système de freinage à double étage, qui est cependant facilement manipulable par un utilisateur averti pour régler la tension du câble dans un sens ou dans l'autre.

On s'assure ainsi d'obtenir facilement et à coup sûr la bonne disposition et la bonne tension de l'ensemble d'arrimage d'une charge sur sa remorque,

## Revendications

1. Ensemble d'arrimage d'une charge (2) sur un bâti (4) comportant un câble (6) dont une extrémité est adaptée à coopérer avec un organe de fixation solidaire de la charge ou du bâti et dont la tension est obtenue par le déplacement le long d'une crémaillère (20) d'un boîtier (18) sur lequel est fixée l'extrémité opposée du câble, ledit boîtier comportant d'une part un système pignon manivelle adapté à coopérer avec une barre formant la crémaillère qui est réglable en inclinaison autour de deux axes d'articulation portés par le bâti et le long de laquelle est adapté à se déplacer ledit boîtier à pignon (34) sous l'action de la manivelle (32) pour régler la tension dudit câble, **caractérisé en ce que** l'ensemble d'arrimage comporte d'autre part des moyens de freinage adaptés à empêcher le déplacement dudit boîtier le long de ladite barre par le blocage en rotation dudit pignon, lesdits moyens de freinage comportant un frein (42) qui agit directement sur le pignon et un verrou (46) qui agit directement sur le frein de telle sorte que ledit frein peut être actionné pour dégager le pignon uniquement lorsque ledit verrou est dans une position dégagée dans laquelle il ne bloque pas le frein.

2. Ensemble d'arrimage selon la revendication 1, **caractérisé en ce que** le frein et le verrou sont montés en rotation, ledit frein (42) étant adapté à passer d'une position passive d'engagement à une position de dégagement par rapport au pignon (34) tandis que le verrou (46) est adapté à passer d'une position passive de blocage du frein à une position de déblocage, lesdits frein et verrou étant forcés dans leur position passive respective par des moyens de rappel élastique.

3. Ensemble d'arrimage selon la revendication 2, **caractérisé en ce que** le frein (42) est monté en rotation autour d'un deuxième axe de rotation (44) tandis que le verrou (46) est monté à rotation autour d'un troisième axe de rotation (48), lesdits deux axes de rotation étant perpendiculaires entre eux, et **caractérisé en ce que** le verrou porte un moyen de blocage (70) adapté à être au contact du frein dans la position passive et qui se dégage du frein par rotation du verrou.

4. Ensemble d'arrimage selon la revendication 3, **caractérisé en ce que** le moyen de blocage (70) est un doigt disposé en saillie d'une face du verrou (46) qui forme une surface de butée du frein (42) libre en rotation lorsque le verrou a pivoté par rapport à son axe d'articulation.

5. Ensemble d'arrimage selon l'une des revendications précédentes, **caractérisé en ce que** lesdits moyens de freinage sont adaptés à être actionnés par des moyens de préhension (56, 68) solidaires respectivement de l'un des moyens de freinage et qui s'étendent en saillie d'une première paroi du boîtier, vers l'extérieur dudit boîtier (18).

6. Ensemble d'arrimage selon la revendication 5, **caractérisé en ce que** le verrou (46) est adapté à être actionné par un moyen de commande complémentaire (86), qui s'étend en saillie d'une deuxième paroi du boîtier, depuis l'extérieur dudit boîtier.

7. Ensemble d'arrimage selon la revendication 6, **caractérisé en ce que** le moyen de commande complémentaire (86) est actionné automatiquement lorsque ladite manivelle (32) est rapportée contre ladite deuxième paroi du boîtier.

8. Ensemble d'arrimage selon l'une des revendications 1 à 7, **caractérisé en ce que** lesdits axes d'articulation de la barre formant crémaillère (20) sont montés coulissants sur un longeron du bâti (12).

9. Ensemble d'arrimage selon l'une des revendications 1 à 8, **caractérisé en ce que** le câble (6) est plié sur lui-même de manière à former, à l'extrémité (14) adaptée à coopérer avec un organe de fixation solidaire de la charge (8), une boucle et à présenter à l'autre extrémité (16) deux brins (13) parallèles noyés dans un habillage (17), les deux brins étant adaptés à coopérer avec le dispositif tenseur.

10. Ensemble d'arrimage selon la revendication 9, **caractérisé en ce que** l'extrémité du câble formée par les deux brins (13) est rendue solidaire d'un élément d'attache femelle (15) adaptée à coopérer avec un élément d'attache mâle (72) fixée au boîtier à pignon du dispositif tenseur.

## Patentansprüche

1. Einheit zum Festzurren einer Ladung (2) auf einem Gestell (4), wobei die Einheit ein Seil (6) aufweist, von dem das eine Ende zum Eingriff in ein Befestigungselement ausgelegt ist, das mit der Ladung oder dem Gestell fest verbunden ist, und dessen Spannung durch Verschieben entlang einer Zahnleiste (20) eines Gehäuses (18) erhalten wird, an dem das dem Seil gegenüberliegende Ende befestigt ist, wobei das Gehäuse einerseits ein Kurbelritzelsystem aufweist, das zum Eingriff in eine Stange ausgelegt ist, die die Zahnleiste bildet, die in Neigung um zwei Gelenkachsen einstellbar ist, die von dem Gestell getragen werden, und entlang der das Ritzelgehäuse (18) zum Verschieben unter der Einwirkung der Kurbel (32) ausgelegt ist, um die Spannung des Seils zu regulieren, **dadurch gekennzeichnet, dass** die Einheit zum Festzurren andererseits Bremseinrichtungen aufweist, die zur Verhinderung des Verschiebens des Gehäuses entlang der Stange durch Rotationsblockade des Ritzels ausgelegt ist, wobei die Bremseinrichtungen eine Bremse (42), die direkt auf das Ritzel wirkt, und eine Verriegelung (46), die direkt auf die Bremse wirkt, aufweisen, derart, dass die Bremse betätigt werden kann, um das Ritzel nur dann zu entsperren, wenn die Verriegelung in einer entsperrten Position vorliegt, in der sie die Bremse nicht blockiert.

2. Einheit zum Festzurren nach Anspruch 1, **dadurch gekennzeichnet, dass** die Bremse und die Verriegelung drehbar gelagert sind, wobei die Bremse (42) dazu ausgelegt ist, von einer passiven Eingriffsposition in eine bezüglich des Ritzels (34) gelöste Position überzugehen, während die Verriegelung (46) dazu ausgelegt ist, von einer passiven Blockierposition der Bremse in eine Entblockierposition überzugehen, wobei die Bremse und die Verriegelung durch elastische Rückstelleinrichtungen in ihre jeweilige passive Position gedrängt werden.

3. Einheit zum Festzurren nach Anspruch 2, **dadurch gekennzeichnet, dass** die Bremse (42) um eine zweite Rotationsachse (44) drehbar gelagert ist, während die Verriegelung (46) um eine dritte Rotationsachse (48) drehbar gelagert ist, wobei die beiden Rotationsachsen zueinander senkrecht und **dadurch gekennzeichnet sind, dass** die Verriegelung ein Blockiermittel (70) aufweist, die zum Kontakt mit der Bremse in der passiven Position ausgelegt ist und die sich durch Rotation der Verriegelung von der Bremse löst.

4. Einheit zum Festzurren nach Anspruch 3, **dadurch gekennzeichnet, dass** dieses Blockiermittel (70) ein Stift ist, der auskragend an einer Verriegelungsfläche (46) angeordnet ist, die eine Auflagefläche der frei drehbaren Bremse (42) bildet, wenn sich die Verriegelung bezüglich ihrer Gelenkachse umgeklappt hat.

5. Einheit zum Festzurren nach einem der vorhergehenden Ansprüche, **dadurch gekennzeichnet, dass** die Bremseinrichtungen zur Betätigung durch Greifeinrichtungen (56, 68) ausgelegt sind, die jeweils mit einer der Bremseinrichtungen fest verbunden sind und die sich zum Äußeren des Gehäuses (18) hin von einer ersten Wand des Gehäuses vorspringend erstrecken.

6. Einheit zum Festzurren nach Anspruch 5, **dadurch gekennzeichnet, dass** die Verriegelung (46) zur Betätigung durch eine zusätzliche Steuereinrichtung (86) ausgelegt ist, die sich von dem Äußeren des Gehäuses her von einer zweiten Wand des Gehäuses vorspringend erstreckt.

7. Einheit zum Festzurren nach Anspruch 6, **dadurch gekennzeichnet, dass** die zusätzliche Steuereinrichtung (86) automatisch betätigt wird, wenn die Kurbel (32) an der zweiten Wand des Gehäuses angebracht ist.

8. Einheit zum Festzurren nach einem der Ansprüche 1 bis 7, **dadurch gekennzeichnet, dass** die Gelenkachsen der Stange, die die Zahnleiste (20) bildet, gleitend auf einem Längsträger du Rahmen (12) montiert sind.

9. Einheit zum Festzurren nach einem der Ansprüche 1 bis 8, **dadurch gekennzeichnet, dass** das Seil (6) auf sich selbst zurückgefaltet ist, derart dass an dem Ende (14), das zum Eingriff in ein mit der Ladung (8) fest verbundenes Befestigungselement ausgelegt ist, eine Schlaufe gebildet wird, und dass am anderen Ende (16) zwei parallele in eine Verkleidung (17) eingebettete Stränge (13) vorhanden sind, wobei die beiden Stränge zum Eingriff in die Spannvorrichtung ausgelegt sind.

10. Einheit zum Festzurren nach Anspruch 9, **dadurch gekennzeichnet, dass** das Ende des Seils, das durch die zwei Stränge (13) gebildet wird, in einem aufnehmenden Befestigungselement (15) festgemacht wird, das zum Eingriff mit einem Stecker-Befestigungselement (72) ausgelegt ist, das am Ritzelgehäuse (18) der Spannvorrichtung befestigt ist.

## Claims

1. Assembly for securing a load (2) on a frame (4), comprising a cable (6), one end of which is adapted for co-operating with a fastening element secured to the load or to the frame and tension in which is obtained by the displacement along a rack (20) of a housing (18) to which the opposite end of the cable is fastened, said housing comprising, on one hand, a pinion and crank system adapted for co-operating with a bar forming the rack which is angle-adjustable about two pivot pins held by the frame and along which said pinion housing (18) is adapted to be displaced due to the action of the crank (32) for adjusting the tension of said cable, **characterised in that** the securing assembly comprises, on the other hand, braking means adapted for preventing the displacement of said housing along said bar by rotational locking of said pinion, said braking means comprising a brake (42) which acts directly on the pinion and a lock (46) which acts directly on the brake so that said brake can be operated to release the pinion only when said lock is in a released position in which it does not lock the brake.

2. Securing assembly according to Claim 1, **characterised in that** the brake and lock are rotatably mounted, said brake (42) being adapted for moving from a passive position of engagement to a release position with respect to the pinion (34) while the lock (46) is adapted for moving from a passive position of locking the brake to a release position, said brake and lock being forced into their respective passive positions by elastic return means.

3. Securing assembly according to Claim 2, **characterised in that** the brake (42) is rotatably mounted about a second rotation pin (44) while the lock (46) is mounted rotatably about a third rotation pin (48), said two rotation pins being perpendicular to each other and **characterised in that** the lock holds a locking means (70) which is adapted for being in contact with the brake in the passive position and which becomes disengaged from the brake by rotation of the lock.

4. Securing assembly according to Claim 3, **characterised in that** the locking means (70) is a finger arranged projecting from a face of the lock (46) which forms a surface for abutment of the brake (42), rotatably free when the lock has pivoted with respect to its pivot pin.

5. Securing assembly according to any one of the preceding claims, **characterised in that** said braking means are adapted to be operated by holding means (56, 68) which are each secured to one of the braking means and which project from a first wall of the housing towards the outside of said housing (18).

6. Securing assembly according to Claim 5, **characterised in that** the lock (46) is adapted to be operated by a complementary control means (86), which projects from a second wall of the housing, from the outside of said housing.

7. Securing assembly according to Claim 6, **characterised in that** the complementary control means (86) is automatically operated when said crank (32) is fitted against said second wall of the housing.

8. Securing assembly according to any one of Claims 1 to 7, **characterised in that** said pivot pins of the bar forming the rack (20) are slidably mounted on a side member of the frame (12).

9. Securing assembly according to any one of Claims 1 to 8, **characterised in that** the cable (6) is bent back on itself so as to form, at the end (14) adapted to co-operate with a fastening element (8) secured to the load, a loop and so as to have, at the other end (16), two parallel strands (13) embedded in a covering (17), the two strands being adapted to co-operate with the tensioning device.

10. Securing assembly according to Claim 9, **characterised in that** the end of the cable formed by the two strands (13) is secured to a female attachment element (15) adapted to co-operate with a male attachment element (72) fastened to the pinion housing of the tensioning device.
